# EUROPEAN PATENT SPECIFICATION

(11) **EP 1 595 754 B1**
(45) Date of publication and mention of the grant of the patent: **04.06.2008**
(21) Application number: 04425334.2
(22) Date of filing: 10.05.2004
(51) Int. Cl.: B60R 21/20

(54) **Assembly for retaining airbag modules to steering wheels**
Baugruppe mit einem Lenkrad und einem Gassackmodul
Assemblage d'un module de coussin gonflable sur un volant

(43) Date of publication of application: 16.11.2005
(73) Proprietor: KEY SAFETY SYSTEMS, INC., Sterling Heights, MI 48314 (US)
(72) Inventor: Poli, Valerio, 37049 Villa Bartolomea (VR) (IT); Ridolfi, Roberto, 37039 Tregnano (VR) (IT); Anselmi, Andrea, 37039 Tregnagno (VR) (IT); Ridolfi, Adolfo, 37039 Tregnago (VR) (IT)
(74) Representative: Gislon, Gabriele

(56) References cited:
- EP-A- 1 281 586
- EP-A- 1 306 271
- US-A1- 2002 074 781

## Description

The present invention relates to a retaining assembly for airbag modules that may be installed in steering wheels.

Different assemblies are known for installing an airbag module within the steering wheel of a motor vehicle. Commonly, airbag modules are screwed or fitted, by way of pins, screws, nuts, teeth, or similar attachments, in an appropriate housing coupled to the steering wheel frame. Depending on the airbag module serving also as an ancillary device for actuation of the horn of the vehicle, the module needs to be moveable between a resting position and a working position, corresponding to the module co-operating with suitable devices provided within the housing for the actuation of the horn. In this case, the driver operates the horn by pressing the airbag module, directly or indirectly through a cover, into its working position.

An airbag module of this type is usually supported by one or more resilient elements which provide return of the module to the resting position upon its operation.

US Patent No. 6,676,155 discloses an airbag module which is cooperatively moveable with a support lockable with a steering wheel frame. The airbag support is concentrically surrounded by a horn ring on which electrical contacts are arranged for actuation of the horn. Also, springs are provided on the region of the outer periphery of the support. The support can be moved against the bias of the springs in the direction of the horn ring, to actuate the horn. Due to the restoring force of the springs, the support and the module are moved back into their resting position upon actuation of the horn.

Assemblies similar to that of US 6,676,155 are commonly provided for the installation of airbag modules within steering wheels, wherein a plurality of electrical contacts, or alternatively a horn ring, are arranged at the periphery of the module for actuation of the horn, and wherein resilient members bias displacements of the module.

In particular, some of these assemblies provide snap coupling of the airbag module to its housing within a steering wheel or to a support element fitted to the steering wheel. Snap coupling allows an easy and quick in-line assembly of the module within a steering wheel with no need for screws, pins, nuts or similar joining means. An example of snap coupling is disclosed in US 6,676,155.

EP-A-1281586, which corresponds to the preamble of claim 1, discloses a vehicle steering wheel provided with an airbag module moveable for the activation of the horn. At least one guide device connects the airbag module to the steering wheel body. The airbag module moves along a displacement path relative to the steering wheel body.

EP-A-1555170, which is a document falling under art. 54(3) EPC, discloses a retaining assembly for an airbag module comprising four brackets arranged into two link-mechanisms. In particular, two brackets are hinged one to the other to form a link mechanism. Vertical movements imparted to the airbag module causes each link mechanism to collapse, while the bracket ends move horizontally toward the periphery of the armature. There are provided two link mechanisms arranged parallel to each other onto the harmature hub.

Assemblies of the prior art have several drawbacks. For example, when pressing the module for actuation of the horn, due to the arrangement of the resilient members at the periphery of the module, it typically tilts laterally. In fact the driver usually pushes the module, directly or through a cover, in an area on the periphery of the module. Thus, the force is applied to the periphery of the module, resulting in a moment which pivots the module around a resilient member. In this way the module slants toward the aforesaid area. For this reason, i.e. in order to permit lateral movement of the module, relatively large gaps need to be provided between the steering wheel, or the module housing, and the airbag module itself, this leading to un-aesthetical matching between these components.

Moreover, due to aforesaid pressing of the module being applicable through several push buttons, or pressing areas, uniformly arranged on the steering wheel, traditional assemblies need a plurality of electrical contacts, located around the periphery of the module, in order to permit satisfactory horn activation whatever push button/area the driver chooses. Alternatively, traditional assemblies provide a horn ring, that is a circular electrical contact surrounding the module periphery. None of these designs provides equal horn activation loads between different pressing areas. This means that a driver experiences unequal horn performances (different duration and/or intensity) at different areas pressed on the steering wheel during activation of the horn. In fact pivoting of the module causes lateral movements of the module itself and, in this way, also causes module stroke amplifications which, during assembling of the steering wheel, have to be counterbalanced by increasing the gap(s) between the module and the steering wheel or the housing.

In view of above, assembling of steering wheels provided with traditional assemblies for installing airbag modules, which also are to activate the vehicle horn, is often time consuming and expensive.

The present invention provides a retaining assembly for airbag modules associable to steering wheels which obviates the above problems of the prior art assemblies, also allowing to minimize gaps between each module and the related steering wheel and to have equal horn loads between each pressing area on the steering wheel.

The present invention also provides a retaining assembly for airbag modules, in particular a snap-in retaining assembly, which permits in-line assembly of a module in the relating steering wheel in an easy and quick way.

There is provided in accordance with the present invention an assembly for retaining an airbag module to the frame of a steering wheel of a vehicle, having the features of claim 1.

Mechanical means are preferably rigid for transmitting to said second area displacements which preferably are substantially identical to those imparted to said first area.

According to a preferred embodiment of the invention, said second area is substantially diametrically opposite to the first one with respect to the axis of rotation of the steering wheel. Advantageously, only those movements along the axis of rotation of the steering wheel, initially imparted to a portion of the module itself, are shifted to a second portion of the module substantially diametrically opposite to the first portion, this preventing the module from tilting while being pressed by a driver for the activation of the horn.

According to the preferred embodiment of the invention, the mechanical elements comprise at least one bracket which is removably hinged to the steering wheel, for example to its frame, in a direction substantially perpendicular to the axis of the module. The bracket can be hinged at its ends or at any suitable length. Also, said bracket provides removable attachment with the airbag module, preferably with its lower periphery in correspondence of engaging legs or points of the module, through a snap-in attachment at both ends of the bracket itself. In this way, any movement a driver may impart, directly or through a cover, on a first portion of the airbag module near a first end of the bracket, this movement is identical shifted by the bracket to its second end, i.e. to a second portion of the module diametrically opposite to the first on the length of the bracket.

Providing suitable means for avoiding movements of the module around the bracket length permits to achieve the axial drive of the same module. In the preferred embodiment axial drive of the module is achieved by duplicating the aforesaid mechanical elements, i.e. by using two brackets in cross arrangement. In this way, by pivoting around the respective hinge(s), brackets drive the airbag modules to move exclusively parallel to the axis of rotation of the steering wheel, and preferably along the module axis, from the resting position to the working position. In particular, brackets transfer to a second leg of the module only identical axial movements imparted to a first leg, each leg being engaged to an end of a single bracket. Because of movements being transmitted identically (i.e. same amount), to the diametrically opposite side of the module from the one where they are imparted, the retaining assembly of the invention provides constant activation loads between different points pushed by the driver.

Alternatively, the two brackets may be arranged in triangular shape or one bracket can be "Y" or "Δ" shaped to have three points of engagement with the steering wheel frame. For example brackets may provide attachment to the airbag module in three points, by sharing a coupling point through a spherical hinge.

The retaining assembly of the invention may comprise an electric contact, attached to the steering wheel, which co-operates with the airbag module for actuation of the horn.

The retaining assembly of the invention overcomes drawbacks of traditional module-steering wheel assemblies, by preventing lateral movements of the airbag module and in so doing avoiding any amplification of the module stroke. This permits setting minimum widths for the gap(s) between the module and the steering wheel, with evident improvements in the aesthetics of the steering wheel. It is important to point out that the assembly of the invention provides a constant horn activation loads, which means that a driver experiences equal horn performances (same duration and/or intensity) at different points pressed on the module during activation of the horn.

Since the module is axially driven, it is sufficient to set a single electrical contact for the actuation of the horn. This highly simplifies pre-assembling of the steering wheel and reduces costs. Moreover, for the same reasons, the assembly can operate with only a single resilient member, for example a spring.

Another advantage is in the extremely quick and simple in-line assembly of the airbag module in the steering wheel. In fact the retaining assembly can provide a snap-in attachment of the module to the aforesaid bracket(s) with no need for screws, pins, nuts, teeth, etc..

For some markets, providing motor vehicles with airbags is not mandatory. If the steering wheel is not provided with an airbag module, the assembly of the invention is not dangerous for the driver in case of impact, since no cutting or sharp surfaces face the driver. Moreover mechanical elements of the assembly can be easily removed from the steering wheel.

The invention will now be described in greater detail with reference to the drawings enclosed as a non-restrictive example, where:
- figure 1 is a perspective view of an embodiment of a retaining assembly according to the present invention;
- figure 2 is a top view of the assembly of figure 1;
- figure 3 is a perspective view of an airbag module installed on a steering wheel by way of the retaining assembly of figure 1;
- figure 4 is a perspective view of an airbag module compatible to the assembly of figure 1;
- figure 5 is a perspective partial view of the retaining assembly of figure 1 while snapping in the airbag module of figure 4;
- figure 6 is a perspective view of the airbag module of figure 5 in its resting position; and
- figure 7 is a perspective view of the airbag module of figure 5 during horn activation.

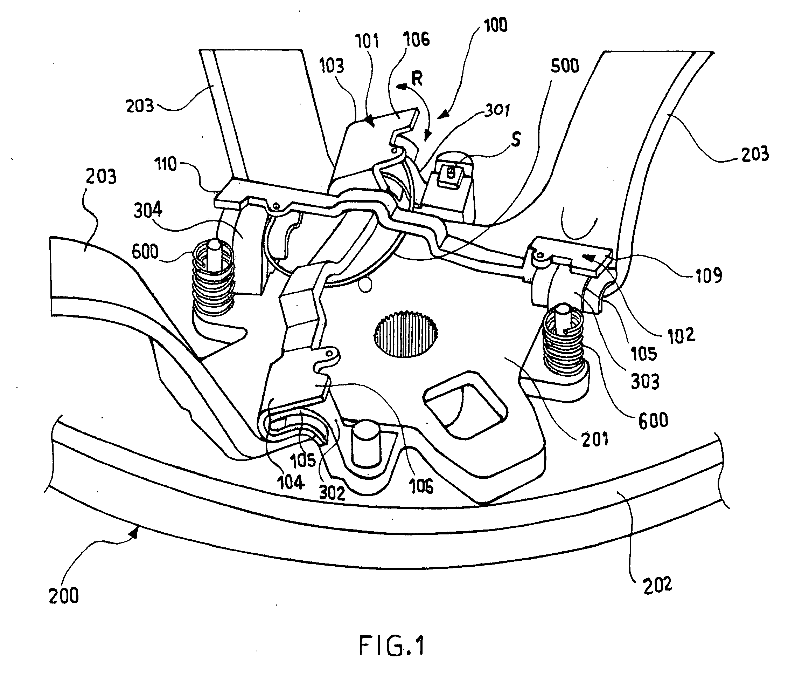

Figure 1 illustrates a retaining assembly **100** according to the present invention, provided on a steering wheel **200,** in particular on the hub **201** of its frame, where driver airbag modules (DABs) are usually mounted. Typically, the steering wheel **200** comprises a ring portion **202** connected to the hub **201** through a plurality of spokes **203.**

Retaining assembly **100** can be provided directly on the hub **201** or can be mounted on a support which can be fixed to the hub **201,** for example a suitable plate. The assembly **100** comprises mechanical elements for imposing, at a second side of an airbag module functionally assembled with the steering wheel **200,** displacements parallel to the steering wheel axis of rotation, imparted to a first side of the module. Such mechanical elements may be of a different type, depending on various parameters as, for example, the room available in correspondence of the hub **201,** or the airbag module size. What is important for such elements is their capacity to drive an airbag module exclusively parallel to the axis of rotation of the steering wheel, preferably along the axis of the module itself, thus preventing lateral movements.

In the embodiment shown in figure 1, the mechanical elements comprise at least a bracket **101,** which is hinged to the hub **201.** Preferably, the bracket **101** is hinged at its ends **103, 104** and pivots in the direction R.

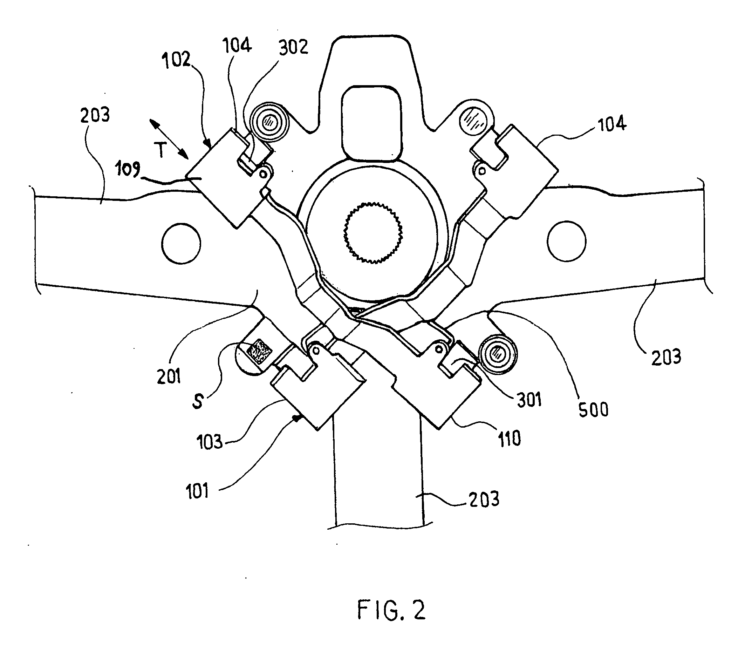

For this reason, the hub **201,** or the support plate which eventually joins the assembly **100** to the hub **201,** is provided with suitable hinges **301, 302** for supporting rotation of the bracket **101.** The rotation angle of the bracket **101** is determined by the shape of its ends **103, 104** and by the shape of the hinges **301, 302.** Attachment between, respectively, the ends **103, 104** and the hinges **301, 302** is preferably removable to allow easy assembling and disassembling of the assembly **100.** Each end **103, 104** has a channel **105** which permits insertion of a hinge **301, 302,** as illustrated in figure 1. Thus, the bracket **101** can longitudinally slide, as indicated by the direction **T** of figure 2, so as to be definitely linked to the hinges **301, 302** or separated from the same.

The hinges **301, 302** may be coupled to the hub **201.** In the shown embodiment the hinges **301, 302** are directly obtained by the hub **201** moulding. Concerning the bracket **101,** it may be obtained by plate bending or moulding of plastic resin or metal.

It will be understood that if the bracket **101** is made of a flexible material which permits twisting of the bracket **101** when loaded, displacements transmitted from one end **103** or **104** to the other end **103** or **104** will not be identical but lightly lessened, for example to about the 60%. For this reason the bracket **101** is preferably rigid, although such a flexible material could be adopted for economic reasons.

The bracket **101** also provides means for engaging an airbag module, for example a traditional driver airbag module DAB. Such engaging means can be of a traditional type, i.e. screws, nuts, pins, teeth, etc., but preferably they allow snap-in attachment to the airbag module. For example, the bracket **101** is provided, at each end **103, 104,** with a tab **106** which engages a suitable cavity on the module. In this way, once a DAB module is snapped in place by the bracket **101,** any vertical movement imparted on a side of the module in correspondence of end **103,** causing its rotation, is equally transmitted to the diametrically opposite side of said module by the end **104.**

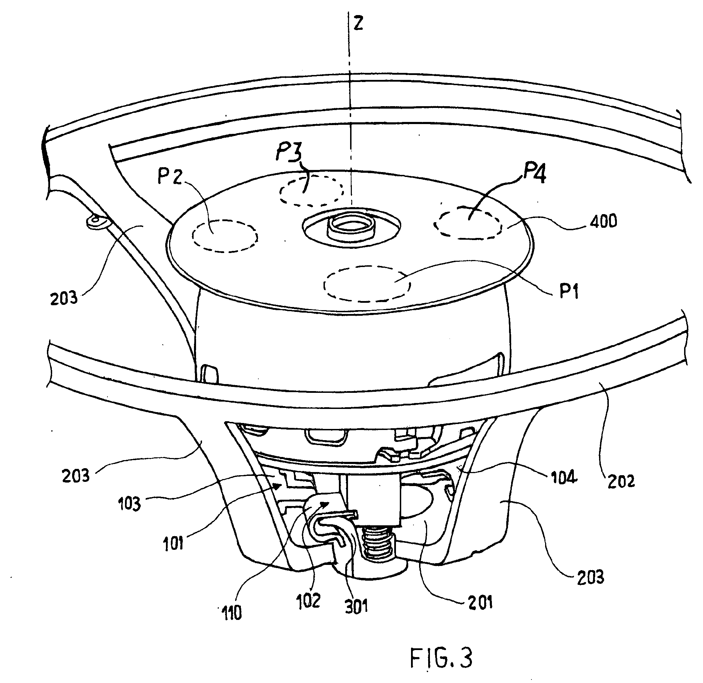

In order to avoid module rotation around the bracket **101** axis, the assembly **100** may provide suitable guides, bearings, etc.. Moreover, position of such mechanical means can be arranged in order to meet assembling needs or customer's requests. In the preferred embodiment, the assembly **100** comprises a second bracket **102** which is crisscross mounted with respect to the first bracket **101,** as shown in figures 1-7. In this way, a DAB module **400** (figure 3) can be driven by the assembly **100** exclusively in a direction parallel to the axis of rotation Z of the steering wheel, with no possibilities for the module **400** to tilt laterally.

Considering now figures 1-3, if the driver pushes the DAB module **400** on the area **P1,** a force is transmitted which causes the module **400** to move from its resting position toward the hub **201.** Consequently a displacement will be imparted to the end **110** of the second bracket **102.** At this point, a traditional retaining assembly will exhibit tilting of the DAB module **400** toward the pushed side. Advantageously, the assembly **100** drives the DAB module **400** in a direction parallel to the axis of rotation Z of the steering wheel due to the displacement imparted at the end **110** of the bracket **102** being equally (rigidly) transmitted both to the end **109,** which engages the side (area **P3)** of the module **400** diametrically opposite to that corresponding to the area **P1,** and to the ends **103** and **104** of the bracket **101** (corresponding to areas **P2** and **P4),** which also engage the module **400.** During operation of the assembly **100,** the brackets **101** and **102** pivot on respective hinges **301, 302, 303, 304,** thus allowing the module **400** to move parallel to the axis of rotation Z of the steering wheel and reach its working position corresponding to the actuation of the horn of the vehicle provided with the steering wheel **200.** Operation of the assembly **100** does not change if the driver pushes an area **P2** differently located on the module **400:** only vertical components of movements imparted to a side of the module **400** will be equally transmitted by the brackets **101** and **102** to the diametrically opposite side of the same module **400.**

Once the horn has been activated, the DAB module **400** is returned to its resting position by one ore more resilient elements. In the illustrated embodiment the resilient elements are two springs **600.**

The retaining assembly according to the invention provides constant horn activation loads, i.e. the loads necessary to close the electrical circuit controlling the horn. In fact, in view of the module **400** being axially driven, whatever area the driver may push on the module **400,** it will provide constant horn performances. This means that there is a strict dependency between a given displacement imparted to the module **400** by the driver and intensity and duration of a horn stroke, without alteration of its performances being caused by tilting of the module **400.** In this way possibilities of failures in activating the horn by a driver are highly reduced and there is no need for large gaps in the steering wheel coverings to compensate amplifications of module movements.

Assembly **100** provides means for avoiding the brackets **101** and **102** from disengaging the hinges **301, 302, 303, 304.** For example, as best shown in figures 2 and 3, the brackets **101** and **102** may be connected by way of at least a resilient element **500** which keeps the ends **103, 104, 109, 110** of the brackets **101** and **102** in position. In particular, the resilient element **500** is a wire spring attached, in a removable way, to ends **103** and **110** of the brackets **101** and **102.** In this way, in order to achieve disassembling of the assembly **100,** it is sufficient to remove the wire spring **500,** and to slide each bracket **101** or **102** along its axis (direction **T** of figure 2) at a position corresponding to disengaging of the channel **105** from the respective hinge **301, 302, 303, or 304.**

Moreover, because of the DAB module **400** being vertically driven, only one electrical contact is needed for horn actuation. It may be of any known type. Preferably the assembly **100** provides a single switch **S,** located (see figure 1) on the periphery of the hub **201,** in correspondence of the travel height of the module **400.** During horn actuation, the switch **S** is pressed by module **400,** thus actuating the vehicle horn.

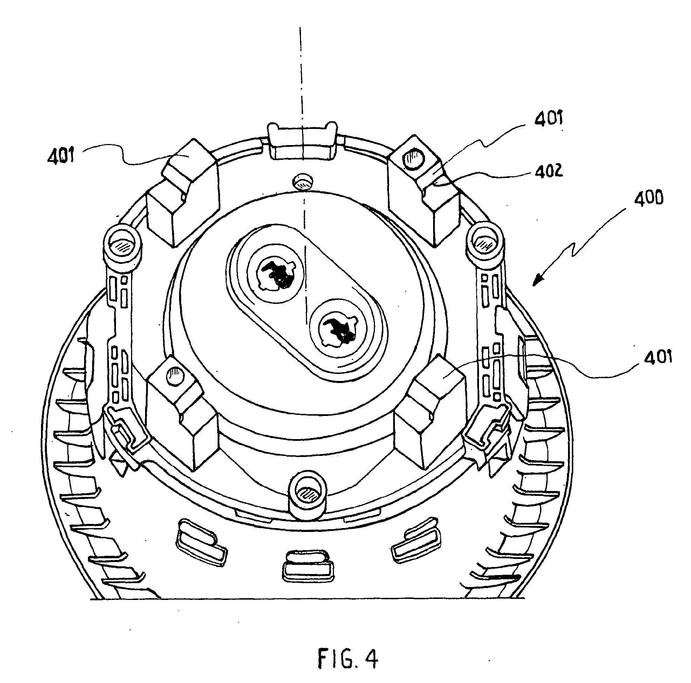

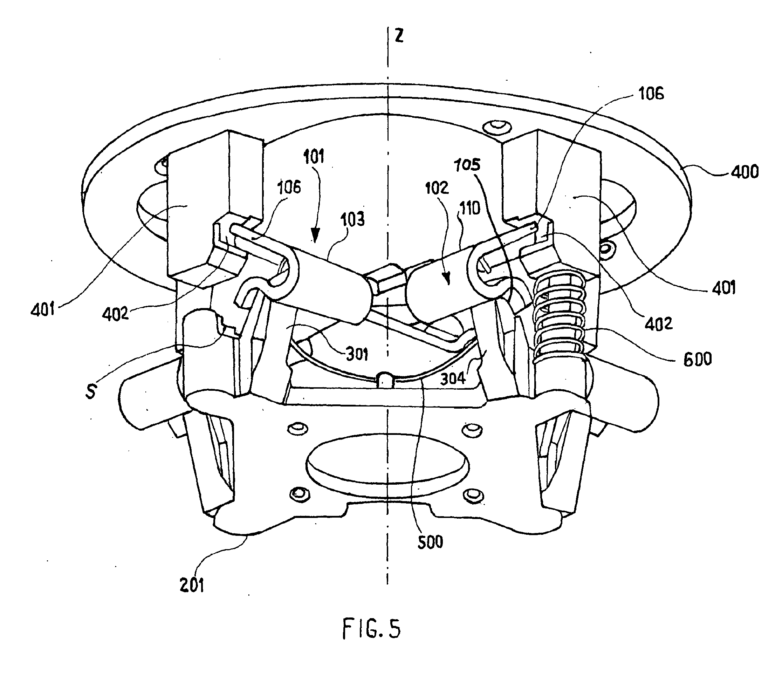

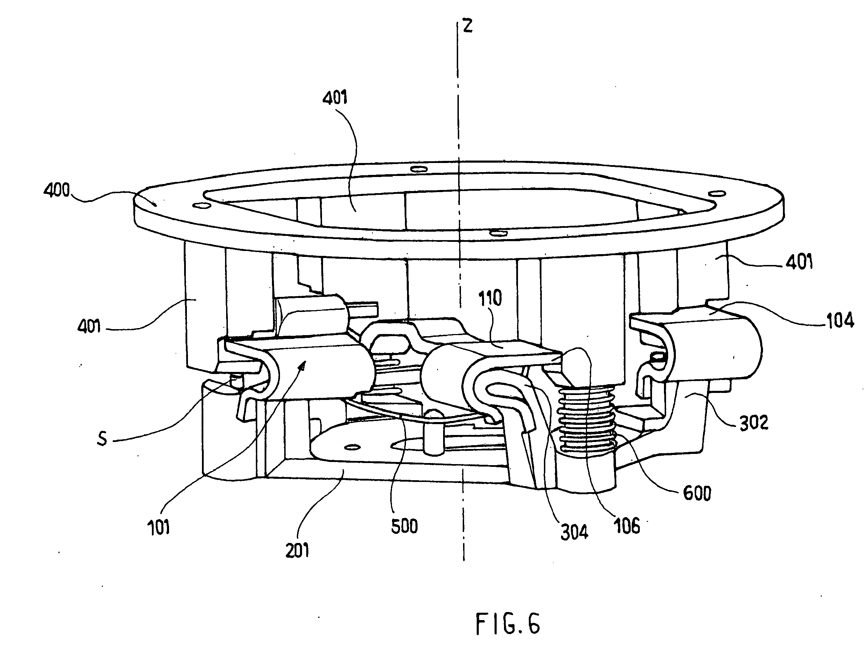

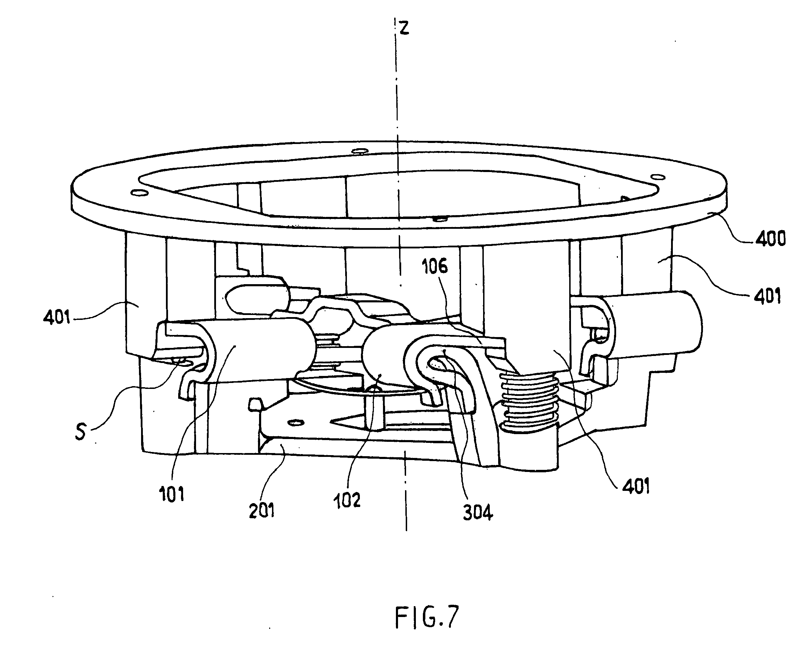

The skilled person will understand that the retaining assembly according to the invention can be applied to many different types of airbag modules, independently from their shape. Figure 4 shows a particular DAB module **400** which can be easily retained by an assembly **100.** The module **400** provides, at its bottom, a plurality of legs **401,** preferably each leg **401** being located so to overlay one of the ends **103, 104, 109, 110** of the brackets when the module **400** is coupled to the assembly **100.** Figure 5 schematically illustrates how the module **400** (only its bottom is shown) can be snapped into the assembly **100.** At a first moment each leg **401** is put into contact with a tab **106** of an end **103, 104, 109, 110** of a bracket, in such a way that the tab **106** is aligned with a suitable groove **402** provided on the legs **401.** By pushing the module **400** toward the hub **201,** the tabs **106** snap into groves **402** thus retaining the module **400** in its resting position, as illustrated in figure 6. In this position the module **400** is ready to be pressed by the driver for activation of the horn, directly or through a covering. Figure 7 illustrates the module **400** in its working position, corresponding to the switch **S** being operated by a leg **401,** i.e. to the horn actuation.

While engaging the module **400** with the assembly **100,** i.e. while pushing the module **400** so that the tabs **106** enter the grooves **402,** the brackets **101, 102** are first pivoted downwardly toward the hub **201.** Then the brackets **101, 102** can slide along their axis (see direction **T** of figure 2 for bracket **102)** in order to mismatch the channels **105** with respective hinges **301, 302, 303,** or **304.** Sliding of the brackets **101, 102** is automatically carried out by the resilient element **500,** i.e. by the wire spring. In this position the brackets **101, 102** cannot pivot upwardly over the module **400** resting position. The wire spring **500** or any other suitable means will keep the brackets **101, 102** in position, thus avoiding incidental disengagement of the module **400.**

Disengagement of the DAB module **400** can be accomplished by sliding each bracket **101, 102** along its axis, overcoming the resilient element **500** resistance, until the channel **105,** provided on each bracket end **103, 104, 109, 110,** is aligned with the respective hinge **301, 302, 303,** or **304.** In this position the brackets **101, 102** can rotate (see direction **R** of figure 1 for bracket **101)** upwardly over the module **400** resting position until each tab **106** exits the respective groove **402,** thus permitting separation of the module **400** from the steering wheel hub **201.**

Assembly **100** may provide a traditional attachment with the related DAB module, different from the disclosed one. However, the disclosed attachment provides no screws, neither pins or other means which make the module **400** assembly more complicated or time consuming. In fact it is an advantageous feature of the invention that to provide an easy in-line assembly which can be accomplished, for example at the assembly line of the vehicle, simply by inserting module **400** onto hub **201** and pressing until brackets **101** and **102** snap on module **400.**

Furthermore, according to an alternative embodiment of the present invention, the assembly **100** may provide brackets **101** and **102** hinged to the DAB module **400** and grooves **402** arranged on the steering wheel hub **201.** Also such embodiment provides an easy in-line assembly of the module **400** onto the steering wheel **200.**

## Claims (Claims for the following Contracting State(s): AT, BE, BG, CH, CY, CZ, DK, EE, ES, FI, GR, HU, IE, IT, LI, LU, MC, NL, PL, PT, RO, SI, SK, TR)

1. A retaining assembly for an airbag module (400) associable to the frame (201) of the steering wheel (200) of a vehicle, said assembly comprising
- means (101, 102, 301, 302, 303, 304) for coupling said airbag module (400) to said steering wheel frame (201), the module (400) being moveable between a resting position and a working position corresponding to the actuation of the horn of said vehicle,
- resilient members (600), interposed between the airbag module (400) and the steering wheel frame (201), for returning said airbag module (400) to said resting position upon activation of said horn,
**characterized in that**
said coupling means (101, 102, 301-304) comprise mechanical elements (101, 102, 301-304, 401) for permitting only the displacements of the airbag module (400) in translation parallel to the axis of rotation (Z) of the steering wheel.

2. A retaining assembly according to claim 1, wherein said mechanical elements (101, 102, 301-304, 401) are rigid to transmit substantially identical displacements from said first area (P1, P2) to said second area (P3, P4).

3. A retaining assembly according to claim 1 or claim 2, wherein said at least one second area (P3, P4) is substantially diametrically opposite to the first one with respect to said axis of rotation (Z) of the steering wheel.

4. A retaining assembly according to any previous claim from 1 to 3, wherein said mechanical elements comprise at least a hinge (301-304).

5. A retaining assembly according to any previous claim from 1 to 4, wherein said mechanical elements (101, 102, 301-304, 401) comprise at least one bracket (101, 102), said bracket (101, 102) having at least three engaging means for engaging said frame (201) with said airbag module (400).

6. A retaining assembly according to any previous claim from 1 to 4, wherein said mechanical elements (101, 102, 301-304, 401) comprise two brackets (101, 102) in cross arrangement, each bracket (101, 102) having two engaging means (106, 301-304) for engaging said frame (201) with said airbag module (400).

7. A retaining assembly according to claim 5 or claim 6, wherein said brackets (101, 102) are hinged to said steering wheel frame (201).

8. A retaining assembly according to claim 7, wherein said brackets (101, 102) are arranged substantially perpendicular to said axis of rotation (Z) of the steering wheel and are hinged at their ends (103, 104, 109, 110).

9. A retaining assembly according to claim 7 or claim 8, wherein said brackets (101, 102) comprise engaging means for removably engaging with said airbag module (400), said engaging means being selected from snap-in means, screw means, pin means, teeth means.

10. A retaining assembly according to claim 9, **characterized in that** said snap-in attachment means (106) is provided at both ends (103, 104, 109, 110) of said brackets (101, 102).

11. A retaining assembly according to any previous claim 1-10, wherein said mechanical elements (101, 102, 301-304, 401) are selected from a plurality of legs (401) provided with grooves (402) and at least one bracket (101, 102).

## Claims (Claims for the following Contracting State(s): DE, FR, GB, SE)

1. A retaining assembly for an airbag module (400) associable to the frame (201) of a steering wheel (200) of a vehicle, said assembly comprising
- means (101, 102, 301, 302, 303, 304) for coupling said airbag module (400) to said steering wheel frame (201), the module (400) being moveable between a resting position and a working position corresponding to the actuation of the horn of said vehicle,
- resilient members (600), interposed between the airbag module (400) and the steering wheel frame (201), for returning said airbag module (400) to said resting position upon activation of said horn,
**characterized in that**
said coupling means (101, 102, 301-304) comprise mechanical elements (101, 102, 301-304, 401) for permitting only the displacements of the airbag module (400) in translation parallel to the axis of rotation (Z) of the steering wheel, wherein said mechanical elements include at least one bracket (101) having both ends (103, 104) hinged to said frame (201), with the proviso that when two brackets are provided, their ends are not interlocked.

2. A retaining assembly according to claim 1, wherein said mechanical elements (101, 102, 301-304, 401) are rigid to transmit substantially identical displacements from said first area (P1, P2) to said second area (P3, P4).

3. A retaining assembly according to claim 1 or claim 2, wherein said at least one second area (P3, P4) is substantially opposite to the first one with respect to said axis (Z).

4. A retaining assembly according to any previous claim from 1 to 3, wherein said mechanical elements comprise at least a hinge (301-304).

5. A retaining assembly according to any previous claim from 1 to 4, wherein said mechanical elements (101, 102, 301-304, 401) comprise at least one bracket (101, 102), said bracket (101, 102) having at least three engaging means for engaging said frame (201) with said airbag module (400).

6. A retaining assembly according to any previous claim from 1 to 4, wherein said mechanical elements (101, 102, 301-304, 401) comprise two brackets (101, 102) in cross arrangement, each bracket (101, 102) having two engaging means (106, 301-304) for engaging said frame (201) with said airbag module (400).

7. A retaining assembly according to claim 5 or claim 6, wherein said brackets (101, 102) are hinged to said steering wheel frame (201).

8. A retaining assembly according to claim 7, wherein said brackets (101, 102) are arranged substantially perpendicular to said module axis (Z) and are hinged at their ends (103, 104, 109, 110).

9. A retaining assembly according to claim 7 or claim 8, wherein said brackets (101, 102) comprise engaging means for removably engaging with said airbag module (400), said engaging means being selected from snap-in means, screw means, pin means, teeth means.

10. A retaining assembly according to claim 9, **characterized in that** said snap-in attachment means (106) is provided at both ends (103, 104, 109, 110) of said brackets (101, 102).

11. A retaining assembly according to any previous claim 1-10, wherein said mechanical elements (101, 102, 301-304, 401) are selected from a plurality of legs (401) provided with grooves (402) and at least one bracket (101, 102).

## Patentansprüche (Patentansprüche für folgende(n) Vertragsstaat(en): AT, BE, BG, CH, CY, CZ, DK, EE, ES, FI, GR, HU, IE, IT, LI, LU, MC, NL, PL, PT, RO, SI, SK, TR)

1. Haltebaugruppe für ein Airbagmodul (400), das dem Rahmen (201) des Lenkrades (200) eines Fahrzeugs zugeordnet werden kann, wobei die Baugruppe Folgendes umfasst:
- Mittel (101, 102, 301, 302, 303, 304) zum Koppeln des Airbagmoduls (400) an den Lenkradrahmen (201), wobei das Modul (400) bewegt werden kann zwischen einer Ruhestellung und einer Arbeitsstellung, die dem Betätigen der Hupe des Fahrzeugs entspricht,
- elastische Elemente (600), die zwischen das Airbagmodul (400) und den Lenkradrahmen (201) geschaltet sind, um das Airbagmodul (400) auf das Betätigen der Hupe des Fahrzeugs hin zu der Ruheposition zurückzuführen,
**dadurch gekennzeichnet, dass**
die Kopplungsmittel (101, 102, 301-304) mechanische Elemente (101, 102, 301-304, 401) umfassen, um nur die Verschiebungen des Airbagmoduls (400) in einer Translation parallel zur Drehachse (Z) des Lenkrades zu ermöglichen.

2. Haltebaugruppe nach Anspruch 1, wobei die mechanischen Elemente (101, 102, 301-304, 401) starr sind, um im Wesentlichen identische Verschiebungen von der ersten Fläche (P1, P2) zu der zweiten Fläche (P3, P4) zu übertragen.

3. Haltebaugruppe nach Anspruch 1 oder Anspruch 2, wobei die wenigstens eine zweite Fläche (P3, P4) in Bezug auf die Drehachse (Z) des Lenkrades im Wesentlichen der ersten diametral gegenüberliegt.

4. Haltebaugruppe nach einem der vorhergehenden Ansprüche von 1 bis 3, wobei die mechanischen Elemente wenigstens ein Gelenk (301-304) umfassen.

5. Haltebaugruppe nach einem der vorhergehenden Ansprüche von 1 bis 4, wobei die mechanischen Elemente (101, 102, 301-304, 401) wenigstens eine Stütze (101, 102) umfassen, wobei die Stütze (101, 102) wenigstens drei Eingriffsmittel hat, um den Rahmen (201) mit dem Airbagmodul (400) in Eingriff zu bringen.

6. Haltebaugruppe nach einem der vorhergehenden Ansprüche von 1 bis 4, wobei die mechanischen Elemente (101, 102,301-304, 401) zwei Stützen (101, 102) in Kreuzeingriff umfassen, wobeijede Stütze (101, 102) zwei Eingriffsmittel (106, 301-304) hat, um den Rahmen (201) mit dem Airbagmodul (400) in Eingriff zu bringen.

7. Haltebaugruppe nach Anspruch 5 oder Anspruch 6, wobei die Stützen (101, 102) gelenkig an dem Lenkradrahmen (201) angebracht sind.

8. Haltebaugruppe nach Anspruch 7, wobei die Stützen (101, 102) im Wesentlichen senkrecht zur Drehachse (Z) des Lenkrades angeordnet sind und an ihren Enden (103, 104, 109, 110) gelenkig angebracht sind.

9. Haltebaugruppe nach Anspruch 7 oder Anspruch 8, wobei die Stützen (101, 102) Eingriffsmittel zum lösbaren Ineinandergreifen mit dem Airbagmodul (400) umfassen, wobei die Eingriffsmittel ausgewählt sind aus Einrastmitteln, Schraubenmitteln, Stiftmitteln, Zahnmitteln.

10. Haltebaugruppe nach Anspruch 9, **dadurch gekennzeichnet, dass** die Einrast-Befestigungsmittel (106) an den beiden Enden (103, 104, 109, 110) der Stützen (101, 102) bereitgestellt werden.

11. Haltebaugruppe nach einem der vorhergehenden Ansprüche von 1 bis 10, wobei die mechanischen Elemente (101, 102, 301-304, 401) ausgewählt sind aus mehreren Füßen (401), die mit Rillen (402) versehen sind, und wenigstens einer Stütze (101, 102).

## Patentansprüche (Patentansprüche für folgende(n) Vertragsstaat(en): DE, GB, FR, SE)

1. Haltebaugruppe für ein Airbagmodul (400), das dem Rahmen (201) des Lenkrades (200) eines Fahrzeugs zugeordnet werden kann, wobei die Baugruppe Folgendes umfasst:
- Mittel (101, 102, 301, 302, 303, 304) zum Koppeln des Airbagmoduls (400) an den Lenkradrahmen (201), wobei das Modul (400) bewegt werden kann zwischen einer Ruhestellung und einer Arbeitsstellung, die dem Betätigen der Hupe des Fahrzeugs entspricht,
- elastische Elemente (600), die zwischen das Airbagmodul (400) und den Lenkradrahmen (201) geschaltet sind, um das Airbagmodul (400) auf das Betätigen der Hupe des Fahrzeugs hin zu der Ruheposition zurückzuführen,
**dadurch gekennzeichnet, dass**
die Kopplungsmittel (101, 102, 301-304) mechanische Elemente (101, 102, 301-304, 401) umfassen, um nur die Verschiebungen des Airbagmoduls (400) in einer Translation parallel zur Drehachse (Z) des Lenkrades zu ermöglichen, wobei die mechanischen Elemente wenigstens eine Stütze (101) umfassen, deren beide Enden (103, 104) gelenkig an dem Rahmen (201) angebracht sind, mit dem Vorbehalt, dass, wenn zwei Stützen bereitgestellt werden, deren Enden nicht gekoppelt sind.

2. Haltebaugruppe nach Anspruch 1, wobei die mechanischen Elemente (101, 102, 301-304, 401) starr sind, um im Wesentlichen identische Verschiebungen von der ersten Fläche (P1, P2) zu der zweiten Fläche (P3, P4) zu übertragen.

3. Haltebaugruppe nach Anspruch 1 oder Anspruch 2, wobei die wenigstens eine zweite Fläche (P3, P4) in Bezug auf die Achse (Z) im Wesentlichen der ersten diametral gegenüberliegt.

4. Haltebaugruppe nach einem der vorhergehenden Anspruche von 1 bis 3, wobei die mechanischen Elemente wenigstens ein Gelenk (301-304) umfassen.

5. Haltebaugruppe nach einem der vorhergehenden Ansprüche von 1 bis 4, wobei die mechanischen Elemente (101, 102, 301-304, 401) wenigstens eine Stütze (101, 102) umfassen, wobei die Stütze (101, 102) wenigstens drei Eingriffsmittel hat, um den Rahmen (201) mit dem Airbagmodul (400) in Eingriff zu bringen.

6. Haltebaugruppe nach einem der vorhergehenden Ansprüche von 1 bis 4, wobei die mechanischen Elemente (101, 102, 301-304, 401) zwei Stützen (101, 102) in Kreuzeingriff umfassen, wobeijede Stütze (101, 102) zwei Eingriffsinittel (106, 301-304) hat, um den Rahmen mit dem Airbagmodul (400) in Eingriff zu bringen.

7. Haltebaugruppe nach Anspruch 5 oder Anspruch 6, wobei die Stützen (101, 102) gelenkig an dem Lenkradrahmen (201) angebracht sind.

8. Haltebaugruppe nach Anspruch 7, wobei die Stützen (101, 102) im Wesentlichen senkrecht zu der Modulachse (Z) angeordnet sind und an ihren Enden (103, 104, 109, 110) gelenkig angebracht sind.

9. Haltebaugruppe nach Anspruch 7 oder Anspruch 8, wobei die Stützen (101, 102) Eingriffsmittel zum lösbaren Ineinandergreifen mit dem Airbagmodul (400) umfassen, wobei die Eingriffsmittel ausgewählt sind aus Einrastmitteln, Schraubenmnitteln, Stiftmitteln, Zahnmitteln.

10. Haltebaugruppe nach Anspruch 9, **dadurch gekennzeichnet, dass** die Einrast-Befestigungsmittel (106) an den beiden Enden (103, 104, 109, 110) der Stützen (101, 102) bereitgestellt werden.

11. Haltebaugruppe nach einem der vorhergehenden Ansprüche von 1 bis 10, wobei die mechanischen Elemente (101, 102, 301-304, 401) ausgewählt sind aus mehreren Füßen (401), die mit Rillen (402) versehen sind, und wenigstens einer Stütze (101, 102).

## Revendications (Revendications pour l'(les) Etat(s) contractant(s) suivant(s): AT, BE, BG, CH, CY, CZ, DK, EE, ES, FI, GR, HU, IE, IT, LI, LU, MC, NL, PL, PT, RO, SI, SK, TR)

1. Assemblage de retenue pour un module de coussin d'air (400) pouvant être associé au cadre (201) d'un volant de direction (200) d'un véhicule, ledit assemblage comprenant:
- des moyens (101, 102, 301, 302, 303, 304) pour accoupler ledit module de coussin d'air (400) audit cadre du volant de direction (201), le module (400) pouvant être déplacé entre une position de repos et une position de travail correspondant à l'actionnement de l'avertisseur dudit véhicule ;
- des éléments élastiques (600), agencés entre le module de coussin d'air (400) et le cadre du volant de direction (201), pour ramener ledit module de coussin d'air (400) vers ladite position de repos lors de l'actionnement dudit avertisseur;
**caractérisé en ce que**
lesdits moyens d'accouplement (101, 102, 301-304) comprennent des éléments mécaniques (101, 102, 301-304, 401) pour permettre uniquement les déplacements du module de coussin d'air (400) par un mouvement de translation parallèle à l'axe de rotation (Z) du volant de direction.

2. Assemblage de retenue selon la revendication 1, dans lequel lesdits éléments mécaniques (101, 102, 301-304, 401) sont rigides pour transmettre des déplacements pratiquement identiques de ladite première zone (P1, P2) vers ladite deuxième zone (P3, P4).

3. Assemblage de retenue selon les revendications 1 ou 2, dans lequel ladite au moins une deuxième zone (P3, P4) est pratiquement opposée diamétralement à la première zone par rapport audit axe de rotation (Z) du volant de direction.

4. Assemblage de retenue selon l'une quelconque des revendications 1 à 3, dans lequel lesdits éléments mécaniques comprennent au moins une charnière (301-304).

5. Assemblage de retenue selon l'une quelconque des revendications 1 à 4, dans lequel lesdits éléments mécaniques (101, 102, 301-304, 401) comprennent au moins une console (101, 102), ladite console (101, 102) comportant au moins trois moyens d'engagement pour engager ledit cadre (201) dans ledit module de coussin d'air (400).

6. Assemblage de retenue selon l'une quelconque des revendications 1 à 4, dans lequel lesdits éléments mécaniques (101, 102, 301-304, 401) comprennent deux consoles (101, 102) dans un agencement croisé, chaque console (101, 102) comportant deux moyens d'engagement (108, 301-304) pour engager ledit cadre (201) dans ledit module de coussin d'air (400).

7. Assemblage de retenue selon les revendications 5 ou 6, dans lequel lesdites consoles (101, 102) sont fixées par charnière sur ledit cadre du volant de direction (201).

8. Assemblage de retenue selon la revendication 7, dans lequel lesdites consoles (101, 102) sont agencées de manière pratiquement perpendiculaire audit axe de rotation (Z) du volant de direction et sont fixées par charnière au niveau de leurs extrémités (103, 104, 109, 110).

9. Assemblage de retenue selon les revendications 7 ou 8, dans lequel lesdites consoles (101, 102) comprennent des moyens d'engagement en vue d'un engagement amovible dans ledit module de coussin d'air (400), lesdits moyens d'engagement étant sélectionnés dans le groupe constitué de moyens d'encliquetage, de moyens de vis, de moyens de goupilles et de moyens de dents.

10. Assemblage de retenue selon la revendication 9, **caractérisé en ce que** ledit moyen de fixation à encliquetage (106) est agencé au niveau des deux extrémités (103, 104, 109, 110) desdites consoles (101, 102).

11. Assemblage de retenue selon l'une quelconque des revendications 1 à 10, dans lequel lesdits éléments mécaniques (101, 102, 301-304, 401) sont sélectionnés parmi plusieurs branches (401), comportant des rainures (402) et au moins une console (101, 102).

## Revendications (Revendications pour l'(les) Etat(s) contractant(s) suivant(s): DE, GB, FR, SE)

1. Assemblage de retenue pour un module de coussin d'air (400) pouvant être associé au cadre (201) d'un volant de direction (200) d'un véhicule, ledit assemblage comprenant :
- des moyens (101, 102, 301, 302, 303, 304) pour accoupler ledit module de coussin d'air (400) audit cadre du volant de direction (201), le module (400) pouvant être déplacé entre une position de repos et une position de travail correspondant à l'actionnement de l'avertisseur dudit véhicule ;
- des éléments élastiques (600), agencés entre le module de coussin d'air (400) et le cadre du volant de direction (201), pour ramener ledit module de coussin d'air (400) vers ladite position de repos lors de l'actionnement dudit avertisseur ;
**caractérisé en ce que**
lesdits moyens d'accouplement (101, 102, 301-304) comprennent des éléments mécaniques (101, 102, 301-304, 401) pour permettre uniquement les déplacements du module de coussin d'air (400) par un mouvement de translation parallèle à l'axe de rotation (Z) du volant de direction, lesdits éléments mécaniques englobant au moins une console (101) dont les deux extrémités (103, 104) sont fixées par charnière sur ledit cadre (201), avec la condition que les extrémités ne soient pas verrouillées mutuellement lors de la mise à disposition de deux consoles.

2. Assemblage de retenue selon la revendication 1, dans lequel lesdits éléments mécaniques (101, 102, 301-304, 401) sont rigides pour transmettre des déplacements pratiquement identiques de ladite première zone (P1, P2) vers ladite deuxième zone (P3, P4).

3. Assemblage de retenue selon les revendications 1 ou 2, dans lequel ladite au moins une deuxième zone (P3, P4) est pratiquement opposée à la première zone par rapport audit axe (Z).

4. Assemblage de retenue selon l'une quelconque des revendications 1 à 3, dans lequel lesdits éléments mécaniques comprennent au moins une charnière (301-304).

5. Assemblage de retenue selon l'une quelconque des revendications 1 à 4, dans lequel lesdits éléments mécaniques (101, 102, 301-304, 401) comprennent au moins une console (101, 102), ladite console (101, 102) comportant au moins trois moyens d'engagement pour engager ledit cadre (201) dans ledit module de coussin d'air (400).

6. Assemblage de retenue selon l'une quelconque des revendications 1 à 4, dans lequel lesdits éléments mécaniques (101, 102, 301-304, 401) comprennent deux consoles (101, 102) dans un agencement croisé, chaque console (101, 102) comportant deux moyens d'engagement (108, 301-304) pour engager ledit cadre (201) dans ledit module de coussin d'air (400).

7. Assemblage de retenue selon les revendications 5 ou 6, dans lequel lesdites consoles (101, 102) sont fixées par charnière sur ledit cadre du volant de direction (201).

8. Assemblage de retenue selon la revendication 7, dans lequel lesdites consoles (101, 102) sont agencées de manière pratiquement perpendiculaire audit axe de rotation (Z) du volant de direction et sont fixées par charnière au niveau de leurs extrémités (103, 104,109,110).

9. Assemblage de retenue selon les revendications 7 ou 8, dans lequel lesdites consoles (101, 102) comprennent des moyens d'engagement en vue d'un engagement amovible dans ledit module de coussin d'air (400), lesdits moyens d'engagement étant sélectionnés dans le groupe constitué de moyens d'encliquetage, de moyens de vis, de moyens de goupilles et de moyens de dents.

10. Assemblage de retenue selon la revendication 9, **caractérisé en ce que** ledit moyen de fixation à encliquetage (106) est agencé au niveau des deux extrémités (103, 104, 109, 110) desdites consoles (101, 102).

11. Assemblage de retenue selon l'une quelconque des revendications 1 à 10, dans lequel lesdits éléments mécaniques (101, 102, 301-304, 401) sont sélectionnés parmi plusieurs branches (401), comportant des rainures (402) et au moins une console (101, 102).
